# EUROPEAN PATENT SPECIFICATION

(11) **EP 0 949 209 B1**
(45) Date of publication and mention of the grant of the patent: **22.02.2006**
(21) Application number: 98500169.2
(22) Date of filing: 17.07.1998
(51) Int. Cl.: C02F 3/30, C02F 3/10, C02F 3/28

(54) **Biological process and anoxic and/or aerobic biological reactor for the purification of liquid residues**
Biologisches Verfahren und anoxischer und/oder aerobischer Bioreaktor zur Reinigung von flüssigen Abfällen
Procédé biologique et réacteur biologique anoxique et/ou aérobique pour l'épuration de résidus liquides

(30) Priority: 08.04.1998 ES 9800760; 08.04.1998 ES 9800763
(43) Date of publication of application: 13.10.1999
(73) Proprietor: Ros Roca, S.A., 25300 Tarrega (Lleida) (ES)
(72) Inventor: Roca Enrich, Ramon, 25300 Tarrega (ES)
(74) Representative: Aragones Forner, Rafael Angel

(56) References cited:
- EP-A- 0 546 881
- EP-A- 0 710 626
- DE-A- 3 427 310
- DE-A- 3 737 030
- DE-A- 4 433 444
- DE-C- 4 120 143
- FR-A- 2 190 739
- FR-A- 2 695 928
- GB-A- 1 439 745
- US-A- 4 859 321
- US-A- 5 433 846
- US-A- 5 545 327

## Description

The present invention has as its subject matter a biological process and an anoxic and/or aerobic biological reactor for the purification of liquid residues.

A first subject matter of the present invention consists in a biological process concerning a mixed biological process for the degradation of liquid residues with a high contaminating load and / or high toxicity. This degradation is carried out by the action of adapted bacteria fixed on support elements immersed in the biological reactors.

The process entails an initial conventional physical-chemical treatment, a mixed anoxic-aerobic or vice versa biological treatment, with the mentioned biological reactors, a sludge concentration with the corresponding feed-backs, and in determinate cases, a subsequent treatment with a refining reactor with alternating anoxic-aerobic functioning and, at the end, a conventional physical - chemical treatment is carried out.

Presently, the urban and industrial water purification treatment systems through physical-chemical mechanisms are widely known. In every case, the determination of the process depends on the contamination load associated to the effluent to be treated and the degradation level which is intended.

In general, in theses processes there exists a physical or physical-chemical primary treatment for the elimination of solids and of particles which sediment, and afterwards a biological treatment where oxidation and/or anoxic reactions may be combined, and afterwards, there many exist a clarifier to separate the biomass from the final effluent.

Patents ES-2088747, DE-4130424C2, US-2788127, US-2875151 and US-4874518 regard as known the fact that the anoxic reactors are prior to the aerobic reactor. Also, they acknowledge that the fundamental mechanism for these aerobic or anoxic processes is constituted by bacterial systems.

In the treatment of livestock liquid residues known as liquid manure, of cattle and/or pigs, to which the present invention is dedicated, there exist contaminant loads which sometimes increase by a factor of a hundred, and in these cases they are not considered sewage waters but liquid residues, and also the prefix high (high contaminating load) is included before the naming of their load, which means that these are values above 4000 ppm of organic load (which is the parameter of reference).

These high concentrations make difficult to reach an equilibrium between the biomass growth and the concentration of the substrate in the biological reactor, giving rise to the increase of the toxicity of the system which reduces the efficiency of the purification process.

In order to remedy said inconveniences and reach these objectives several trials have been carried out. Along these lines patents US-4948514, US-4956094, US-5076927, US-5252214, US-5344562, US-5156742 and FR-2674844-A should be pointed out, which describe two processes for the treatment of waste waters with this type of contaminants and in particular in the elimination of phosphates and ammonia. Besides, in the mentioned documents there appear initial contaminant loads values much below those of the present invention, from 30,000 to 100,000 of DQO (total organic charge), not being these values apt for usual practise.

In order to solve said inconveniences and reach the objectives pointed out, a subject matter of the present invention refers to a biological process for the purification of liquid livestock residues referred to liquid manure, of cattle and/or pigs, with high contaminant load and/or high toxicity. The Spanish patent No. P 9601316 of the same applicant constitutes a first advance in this sense because said patent P 9601316 is the priority patent of Patent WO-A-9747561 which relates to a biological process of purification of liquid residues, comprising the following phases, subject the liquid residues to a preliminaries physical-chemical treatment, a treatment in an aerobic biological reactor, a treatment in at least one anoxic biological reactor placed upwards of the aerobic biological reactor, a subsequent biological reactor of refinement, and at least one a feedback of sludge to at least one of anoxic aerobic reactors, and the present invention is a substantial improvement of said prior patent P 9601316 of the applicant P9601316, which is basically focussed on a biological treatment carried out in a mixed reactor made up of two bodies, and which is merely applied to the treatment of liquid manure of pigs and cattle. Depending on the type of farm (breading and/or fattening) where the residue is produced, of the type of feeding, and of the season of the year involved, the analytic values may oscillate between the following values:

| | |
|---|---|
| DQO: | 35,000 - 120,000 ppm (Total organic charge) |
| MES : | 30,000 - 60,000 ppm (Suspension matter) |
| Nt : | 3,000 - 6,500 ppm (Total Nitrogen) |
| Pt: | 1,000 - 3,000 ppm (Total Phosphorous) |
| DBO : | 12,000 - 30,000 ppm (Biological demand of Oxygen) |
| Inhibiting Matter : | 100 - 300 Equitox (Unit of measure) |

The biological degradation process of liquid residues of liquid manure, of pigs and/or cattle of the present invention entails two conventional physical-chemical treatments at the beginning and the end of the process, which is essentially characterised by the liquid residue (P) is subjected to a degradation treatment by using hyperactive bacteria groups produced by adaptation, selection and optimisation of the microbial flora; applying an internal circulation (C) in two opposite directions (3/5) between both uncovered enclosures bodies (A/B) of reactor (R), corresponding to the anoxic-aerobic and the anoxic-anoxic phases to one internal flow direction (5) and the aerobic-anoxic and aerobic-aerobic phases to the opposite internal flow direction (3), producing an optimal degradation of liquid residues, and carrying out a subsequent sludge thickening (6).

The process of the invention feeds the influx into the biological reactor at the middle point of the internal circulation, in one circulation direction and the other.

The present process foresees to effect another bacteriological treatment through the application of an auxiliary biological reactor furnished with support elements for bacteria immersed in the treatment liquid as the main biological reactor mentioned, adequate for specific adjustment parameters.

The process of the invention foresees to inoculate biomass from the main biological reactor to the auxiliary reactor, in order to keep stable the biomass of the latter.

According to the invention, the auxiliary reactor works in an alternate way in the anoxic and aerobic phases in a sequential manner.

A second subject matter of the present invention consists on a biological anoxic and/or aerobic reactor for the purification of waste waters and/or liquid residues with high contaminant and /or toxic load concentrations.

As it is known, in order to purify water there are two known systems, physical-chemical and biological, depending on their initial and final contaminant load, and also of the type of elements to be degraded.

A biological purification system is basically constituted by two components:
- The bacteria (and other micro-organisms) which must degrade the organic matter present in contaminated waters.
- A system which allows the contact between bacteria and the water or liquid residue to be treated and the oxygen that the bacteria need for their metabolism.

Traditional biological treatment systems applied to high load waste waters have important limitations for each of the factors mentioned.

The bacteria used in traditional water treatment plants, usually come from the biological sludge of other urban treatment plants. This type of bacteria do not adapt to the extreme feed conditions of an influx with a contaminant load much higher than those in their natural development media.

In special cases, such as in order to activate conventional water treatment plants for different needs which arise, there are companies which sell specific lyophilised bacteria, but after some time they evolve towards the standard uniformity of the media to which they are applied. That is, that this inoculum does not maintain its efficiency in time but is accompanied by other actions such as those explained in the present invention.

Basically there are three types of biological reactors used commercially:
- Activated sludge, in which bacteria are maintained in suspension in the water and form floccules which are subsequently decanted to be reinoculated into the reactor.
- The percolating filters, in which a deposit filled with a support (typically rasshig rings or similar) are showered from the top with the waste water to be treated, which percolates through the stuffing elements where the bacteria are anchored.
- The bio disks, which are circular plates assembled on a slowly turning axis and are partially immersed (about 40% of their surface) in the media to be treated. The bacteria are anchored onto the disks, taking in oxygen for their metabolism when they leave the media, due to the turning, and contact with the air of the atmosphere.

For several reasons these systems independently show a deficiency referred to the bacteria/waste water/oxygen contact, so that these systems are not enough for the degradation of waters or liquid residues with a high contaminating load.

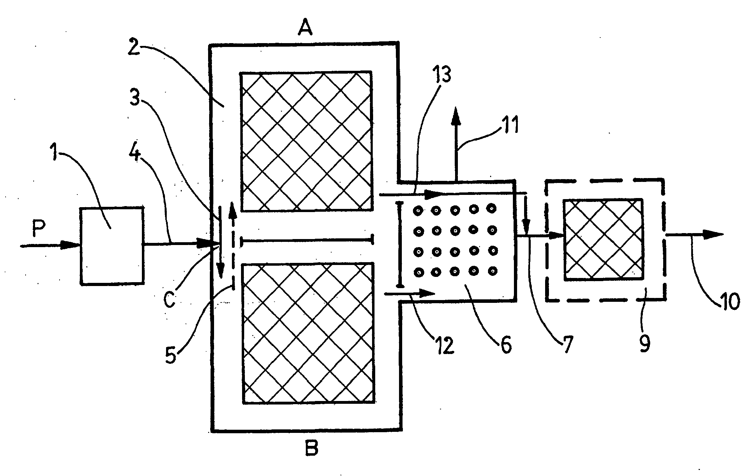

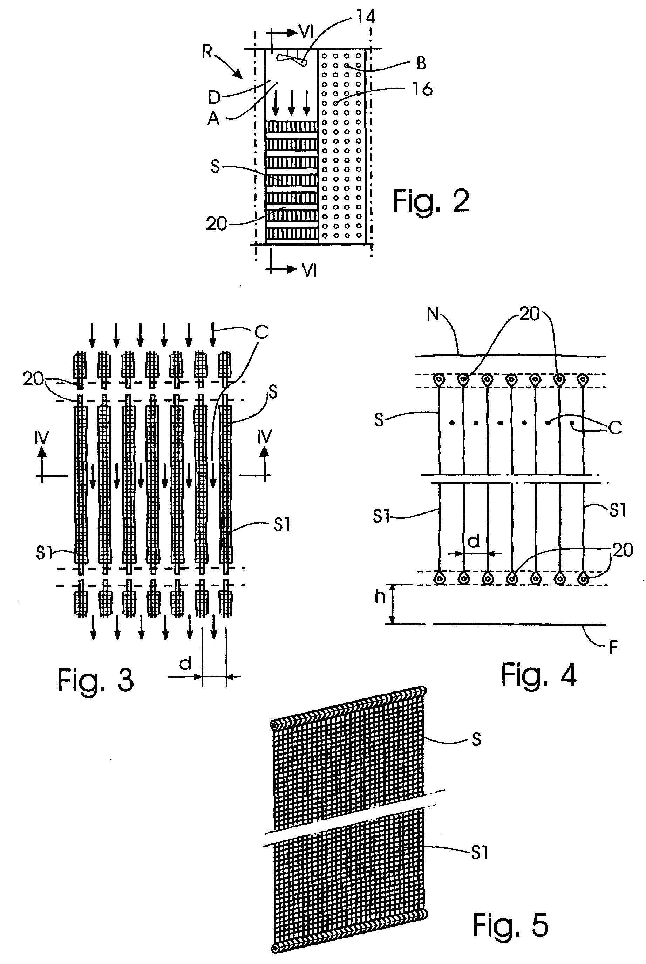

This kind of systems in which exist a contact bacterial/liquid residual/oxygen 1 is described in FR-A-2695928 which describes a process using a reactor (1) consisting on a barrel (closed tank) provided of two mouth, inlet (2) and outlet (3) of the effluent. The effluent run a zigzag travel on a vertical plane (see figures 1 and 2), defined by a plurality of rigid panel of two types (4a and 4b) . Panels (4a) projects above level of liquid in the barrel do not reach the bottom. Panels (4b) do not reach the level of liquid and reach the bottom. These arrangements force the effluent to running a travel beneath the panels (4a) and over the panels (4b). Also, panel (1) having two mouths (6 and 7) for extraction and introduction, respectively, of emitted gas in the biological reaction, and positioned at superior (5) area of closed barrel (1). In this way panels acts as deflectors ("chicane").

In order to solve said inconveniences of the known biological reactors, another subject matter of the present invention refers to a biological anoxic and/or aerobic reactor for the purification of waste waters and/or liquid residues with high contaminant and/or toxic load concentrations, of the kind which comprises two bodies comprising respectives enclosures through which waste water and/or liquid residues to be purified are made to circulate, and which contains several support elements for the fixing of the bacteria, and which is mainly characterised by the support elements being completely immersed in the water and/or liquid residue, allowing the action of air and or oxygen propeller means from the bottom of the enclosure when it acts in an aerobic manner and of means for the circulation of the water and/or liquid residues throughout the enclosure, when it acts in an anoxic manner in order to facilitate the action of the bacteria for the biological degradation of the water and/or liquid residues with a high contaminating load.

According to the present invention, the support elements of the anoxic and/or aerobic biological reactor may consist in open fabric pieces with ruggedness to facilitate the fixation of bacteria, which are placed in a vertical position, fixed spaced and parallel to create "corridors" between the fabric pieces to facilitate the laminar flow of the liquid being treated, and thus the action of the bacteria and micro-organisms, forming biofilms on both sides of the fabric. Said fabric pieces, which act as support elements, consist of sections of pieces of plastic material fabric, whose knitting is mixed gauze like. Also, the lower end of the fabric pieces, are arranged separated from the bottom of the enclosure at a convenient distance for the air and/or oxygen sent by the propellers of the bottom during the aerobic operation of the reactor, to be uniformly spread to the fabric elements to facilitate the action of the bacteria and/or micro-organisms.

According to the present invention, the support elements can also consist of plastic corrugated section tubes to allow the fixation of the bacteria, and are kept locked in perforated cages not completely filled in order to facilitate the regular flow of the liquid being treated, and thus, the action of the bacteria, whose cages are piled but keeping the bottom one at a certain height from the bottom in order to allow the action of the air and/or oxygen propellers placed at the bottom of the enclosure when it acts in an aerobic manner.

The biological reactor of the present invention, is applicable to the purification of waste water and liquid residues with high contaminant and/or toxic load concentration, whatever the type and origin maybe.

However, said biological reactor is specially applicable to the purification of liquid residues corresponding to liquid manure of pigs and/or cattle, to the purification of liquid residues corresponding to leaches from dumping sites, and to the purification of sewage water preferably urban.

These and other characteristics shall be better understood from the detailed description which follows. Three sheets of designs representing a practical operation case which is mentioned only as a non limiting example of the scope of the invention are attached in order to facilitate the mentioned description.

In the drawings :
Figure 1 illustrates in a schematic way the process which constitutes the first subject matter of the present invention.
Figure 2 is a plan view of a fragmented treatment installation which is furnished with the biological reactor comprising two bodies formed by respectives enclosures which constitutes the second subject matter of the present invention,
figure 3 is a fragmented plan view of one body of the biological reactor of figure 1, 2, showing the parallel and spaced arrangement of the support elements,
figure 4 is a view considered from the IV-IV plane of figure 3 showing the support elements in a vertical spaced position,
figure 5 is perspective view of a support element, in the shape of a piece of fabric,
figure 5a is an enlarged perspective view of the knitting constituting the support element illustrated on figures 1 through 5,
figure 5b is an enlarged view considered from the Vb-Vb plane of figure 5a , which illustrates the fabric constituting a support element, schematically showing the biofilms of bacteria and micro-organisms on both sides of the fabric,
figure 6 is a fragmented longitudinal elevation view of one body of the biological reactor of figures 1, 2, considered from the VI-VI plane of figure 2, provided with the support elements of fabric, which shows a type or flow of the liquid residues,
figure 7 is a fragmented longitudinal elevation view of one body of the biological reactor of the invention, similar to figure 6, in which the support elements consist in plastic corrugated tubes arranged in perforated cages, showing the circulation of the liquid being treated,
figure 7a is a perspective view of a support element in the shape of a corrugated tube, and
figure 8 is a plan view of the biological reactor of figure 2 comprising two bodies with support elements made of fabric pieces, showing the flow in a carrousel manner of the liquid being treated.

According to the designs and making reference to figure 1, the biological process of degradation of liquid residues of liquid manure of pigs and/or cattle, which constitutes the first subject matter of the present invention, refers to the treatment of the liquid manure P originating at the farms, which is collected in a homogenisation pool. Next, there is a primary treatment phase in two steps, one being a conventional separation of solids, and the other, consists in an areoflotation system 1 for the separation of colloidal solid matter, adding on to this equipment the corresponding coagulant and/or flocculant doses. The liquid phase 4 is fed to the mixed biological reactor 2 with the biomass held on immersed special support plastic material elements, as described later.

This set is made up by a mixed reactor 3 with two bodies A and B, consisting by respectives enclosures, in which the anoxic - aerobic, anoxic - anoxic, aerobic - anoxic and aerobic-aerobic- phases are squentially combined.

Subsequently, the mixed reactor 2 feeds a sludge thickener 6 and the latter in some cases, feeds an alternate auxiliary reactor 9.

The internal functioning of the mixed biological reactor 2 in its different phases comprises: In the bodies A and B consisting of enclosures of the mixed biological reactor 2 the aerobic or anoxic phases may take place indistinctly, and there is also a circulation flux 3 and 5 between them in one direction or the opposite direction. The influx 4 is injected into the mixed biological reactor 2 at the central or middle point c. The complete operation cycle starts in the anoxic phase in body A and an aerobic in the body B, the internal circulation acts in this phase according to the flux 5. In the next stage, the body A which was in the anoxic phase turns into aerobic, inverting the direction of the circulation flux 3, and ensuing the anoxic phase of the B body. Next, and last, this latter one goes into the aerobic phase, initiating the cycle again.

Another own and innovating characteristic of the invention process comprises the stage in which the circulation phase 3 or 5 is higher than five times or more the feed volume 4.

Another characteristic which is included in the present process, consists in that the leaving effluent 12 of the biological mixed reactor 2, goes into a sludge thickener 6 from where it is redistributed (re-fed) again, in its fractions corresponding to the multiphase reactor 2.

Next, in certain cases an auxiliary reactor 9 furnished with the same type of bacteriological support elements than the main reactor 2, and with an alternate aerobic - anoxic functioning, is installed. This auxiliary reactor 9 represented by a discontinuous line on figure 1, is installed depending on the volume to be treated and/or the degradation level required for the liquid manure which are being purified, whether it is for watering, or to be dumped in the public water system. A biomass flux 13 of the fraction in suspension coming from the main mixed reactor 2 is added to this last auxiliary reactor 9. Lastly, from 10 in the process there exists a conventional physical-chemical treatment with known characteristics.

The operation times of the interphases in the mixed reactor 2, as well as the volume of their internal fluxes are determined by the original composition of the liquid manure to be treated.

The present invention allows the final parameters of the purification process to comply with the regulations in force. Thus, the dumping of this process is the only one known which works in an uninterrupted way (not by batches) which is capable of integrally depurating the liquid residues of pig and cattle liquid manure, yielding a final effluent which strictly complies with said parameters.

As an illustration, said parameters are shown in the table below, of the water Law (Law 29/85 of 2 August), the Hydraulic Public Domain Regulation (R.D. 849/86 of 11 April), R.D. 484/1995 of on dumping regularisation measures and control, and according Spanish provisions.

| | |
|---|---|
| pH | 5.5 - 9.5 |
| DQO | max. 160 |
| MES | max. 80 ppm |
| NH4 | max. 15 ppm |
| Nitric Nitrogen | max 10 ppm |
| Total Phosphorus | max. 10 ppm |

and that the rest of the parameters are set in the limits of Table III of the annexe to Title IV of the Hydraulic Public Domain Regulation.

In relation to figures 2 through 8 of the designs, the anoxic and/or aerobic biological reactor R for waste water and/or liquid residues treatment with high contaminant and/or toxic loads, which constitutes the second subject matter of the present invention, set in a fragmented depurating facility with the general reference D, which schematically illustrates the biological reactor R of the present invention comprising two bodies (A and B) consisting of enclosures, furnished with operating media 14, such as a stirrer or equivalent and furnished with air and/or oxygen diffusers or propellers 16.

The biological reactor R subject matter of the present invention comprising two bodies (A and B) which consists of an enclosure as a sort of pool or similar through which the waste waters and/or liquid residues P to be treated are made to circulate.

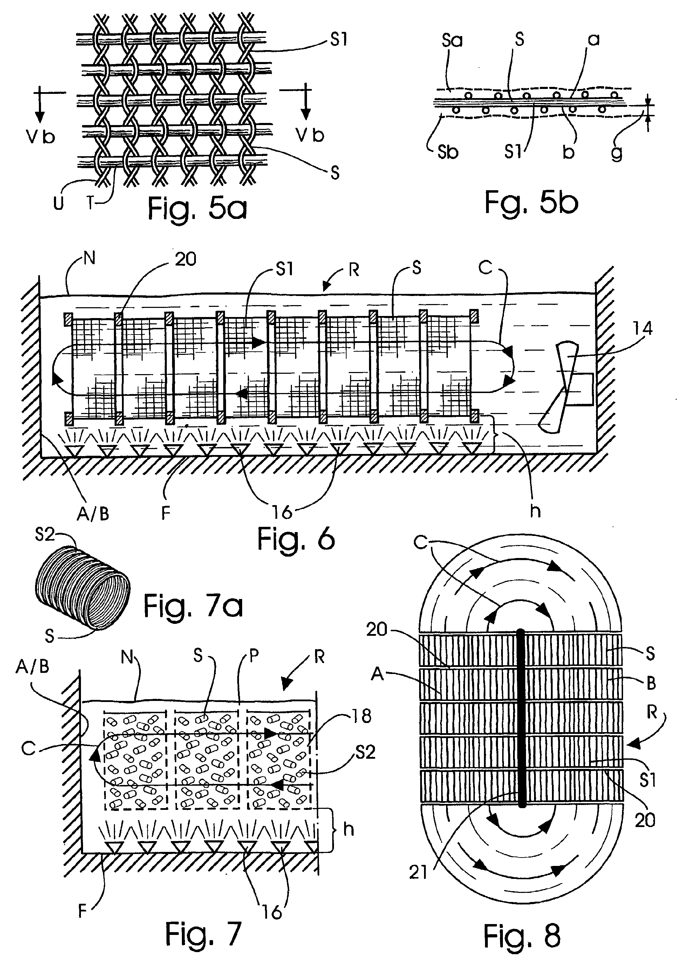

Said biological reactor R subject matter of the present invention is furnished in both bodies A and B with support elements with the general reference S for the setting of the bacteria. As will be described below, said support elements can be plastic fabric pieces S1 or corrugated tubes S2. The two types of support elements S, whether they be S1 or S2, are maintained completely immersed in the liquid P being treated, see figures 6 and 7, in which it can be observed that in two bodies A and B of the biological reactor R, the level N of the liquid P being treated, is above and covers the top part of the support elements S, whether they be fabric pieces S1 or corrugated tubes S2 set in cages 18. Said support elements S are also maintained separated at a certain height from the bottom F of the enclosures A and B of reactor R to allow the correct action of the air and/or oxygen diffuser or propeller means 16 when one of the bodies A and B of the reactor acts in an aerobic form, and at a certain distance from the operating means 14, such as a stirrer or equivalent, in order to effect the circulation of the liquid P being treated when one of bodies A or B of the biological reactor R acts in an anoxic manner, so that the action of the bacteria is facilitated for the biological degradation of waste waters and /or liquid residues with high contaminant load.

The biological reactor R of the invention may act in an anoxic and/or aerobic way, by two bodies A and B in which the support elements S are completely immersed, of which those which are fabric pieces S1 are fixed or almost fixed, and those consisting of corrugated tubes S2 are kept in perforated cages 18, in which the tubes do not occupy the inside of the cage completely, but being the cage with the tubes outside of the liquid, said tubes S2 occupy approximately 2/3 of the volume of the cage, which allows that when the cage 18 is inside the liquid P to be treated, as it is illustrated on figure 7, and said liquid P is circulating, the support tubes S2 of the bacteria are slightly separated from one another, facilitating the fixation of the bacteria to constitute a biomass biofilm.

The support elements S1 which consist of open plastic material fabric, rugged to facilitate the fixation of the bacteria and micro-organisms are illustrated in detail on figures 3, 4, 5, 5a, and 5b. The fabric pieces S1 (see figures 5 and 6 are sections of segments of fabric, in which the warp U and the weft T are made in plastic equal or different, mostly different, in which the warp thread is more traction resistant than that of the weft, since it must endure a greater strain. Said opened fabric can be any appropriate one, but that of the mixed gauze type has very good characteristics for this use.

As it is schematically represented on figure 5b, bacteria fix onto both sides a and b of the fabric, feeding on the biomass and forming two biofilms Sa and Sb on both sides of the fabric S1, with a thickness g respectively.

As is illustrated more clearly on figure 3, and also on figures 4, 6 and 8, the fabric pieces S1 are arranged in bodies A and B of the biological reactor R of the invention immersed and set in a vertical position (see figures 4, 5 and 6)by means of bars 20 at the top and bottom which maintain the fabric pieces S1 tensed, and are arranged spaced and parallel at a distance d between them, so that "corridors" are formed between the tissue pieces S1 which facilitate the laminar flow (see figure 3) of the liquid P being treated, which facilitates the action of the bacteria and micro-organisms, to form the mentioned biofilms Sa and Sb on each side of the fabric S1.

As is illustrated on figures 4 and 6, the bottom end of the fabric pieces S1, are separated from the bottom F of the enclosure A/B a height h, for the air and /or oxygen sent towards the fabric pieces S1 by the propellers or diffusers 16 of the bottom in the aerobic functioning of the biological reactor R, to be uniformly spread through the support elements S1 in order to facilitate the action of the bacteria and / or micro-organisms.

As it has been described and is illustrated on figures 7 and 7a, the support elements S for bacteria, may be plastic corrugated tubes S2, arranged in perforated cages 18, without filling them completely. As has been described on figure 6, for the elements in a fabric piece form S1, also for the elements in tube form S2 set in a cage 18 or the bottom cage 18, if several vertically superposed are arranged, a height h respect to the bottom F is maintained, for the explained reasons, as is illustrated on figure 7.

The circulation C of the liquid P being treated can be carried out in two opposed directions at the top and the bottom in the transversal vertical section of enclosures A/B of the biological reactor R, as is illustrated on figures 6 and 7, with support elements S1 and S2, respectively, or in the same direction in the transversal section of each part of the biological reactor R, as is illustrated on figure 8, with fabric S1 and carrying out the circulation C of the biological reactor R in a carrousel fashion, with the central area 21.

The invention comprises the application of the biological reactor to the treatment of liquid residues corresponding to liquid manure, of cattle and/or pigs, the application to purification of liquid residues corresponding to leaches from urban dump sites, and the application to the purification of waste water preferably urban.

The present invention develops, with this second subject matter related to the reactor, a treatment purification system for waste water or liquid residues P with high contaminating load referred to the organic and/or nitrogen load in its diverse compounds: organic, ammonia and nitrates, and/or phosphorus and/or potassium and/or inhibiting matter. This high load can be in concentrated form or diluted into a greater volume of influx to be treated.

The invention develops a degradation high load system very much above a DQO of 5000 mg/02/1, through biological treatment means of a high oxidation efficiency by biostimulation and selective bioincrease, in which hyperactive bacterial aggregates are used (named consortia) produced by an adaptation, selection and optimisation system of biomass specific for the concentration and type of organic matter which has to be treated and with immersed bacterial support systems.

The description of each of the main components of this system are detailed below:
- Bacterial consortium -aggregates-, a fundamental characteristic of the present invention is the specific bacterial consortium used. This consortium is obtained after an adaptation, selection and optimisation process of the microbial flora and whose basic characteristics are as follows:
   a)Being subjected to a high oxidation rate,
   b)Having the support elements described and illustrated on figures 2 through 8, in order to obtain an increase of the biomass of the system facilitating the formation of biofilms.
   c) The influx being fed with the adequate feedback.

The period necessary to obtain an optimised consortium varies between 2-4 months. After that date the production of the specific and optimised consortium is constant and is used in a continuous manner in the functioning of the plant. The biochemical characteristics of this consortium are basically three:
a) High oxygen consumption, implying a high organic matter oxidation rate.
b) High exoproteolytic activity, which has as a consequence a rapid hydrolysis of the proteic material (which is a very important component of most of the sewage to which this invention is applied).
c) High cellular polysaccharide content, which strengthens the rapid absorption and flocculation both of the colloidal matter and of the bacteria in suspension of the system.

According to the second subject matter of the present invention, the support element specified and described in the designs is incorporated in the reactor R which has the purpose of generating a biofilm which considerably increases the stabilised biomass in the system, and which besides, has two main characteristics:
a) It has a degrading activity in respect to the circulating biomass (in suspension) 2 -4 times greater.
b) It is able to endure toxic loads above 100 equitox.

A specific design for aeration, shaking, recirculation and feedabck of sludge, achieves a high cellular retention time and simultaneously four aspects of the functioning of the reactor are optimised:
1) The contact between the bacterial consortium, the colloidal matter and the circulating bacteria is fast and complete optimising the flocculation caused by the expolysaccharides of the bacterial consortium, having as a consequence a rapid decanting.
2) The oxidation rate of the organic matter is much higher than in the usual systems.
3) The hydrolysis and the final ammonification-nitrification of the nitrogenous material is fast and almost complete.
4) The reduction of the toxicity of the dump to levels non detectable by the Microtox and Daphnia assays.

As has been described and illustrated on figures 2 through 8, the different types of support elements, one of the types described consists of the S2 corrugated tube cut in lengths from 1 to 1.5 times the diameter and with different diameters, depending on the size of the bioreactor, which is illustrated on figures 7 and 7a. This tube S2 is commercially known and used in electric wiring applications, being made of PVC and with a density slightly higher than water. The other type of support element made of plastic material fabric or mesh S2, which is illustrated on figures 3 through 6, consists of fabrics completely immersed by metallic bars, with a warp thread U of polyethylene and the weft thread T of polypropylene, and which are configured with different textures and is of the mixed gauze type. All the set presents a fixed parallel and extremely dense geometry(Figures 4, 5, and 6) in the whole section of bodies A/B of the biological reactor section R, in which the free areas allow the circulating flux C of the liquid P being treated to be completely laminar and uniform throughout the biological reactor whether it be aerobic, anoxic or mixed.

The micro-organisms colonise the surface of the fabric or mesh setting by means of exopolymers (although the structures called "pili" and certain proteic adhesines also intervene). The set of the microbial biomass which forms is called biofilm a and b, fixed biomass or adhered biomass. The advantages of this support element S1 subject matter of the invention, derives mainly from the fact that a higher biomass production is achieved, it has a greater degrading activity, more resistance to toxic products, and than the space requirement is less that in the same biological reactor without supports. This greater biomass and activity is due to the fact that the microbial biofilm which is formed in the solid-liquid interphase contains a greater bacterial density, and the bacteria set are more active than those dispersed in the liquid phase. The mechanisms responsible for this situation may be:
- the ectocellular degradation, substrate collection, enzyme and substrate retention mechanisms. The transport of the substrate is more efficient due to the fact that the exopolymer mesh which constitutes the biofilm, facilitates the interaction between substrates, ectoenzymes and bacteria.
- Nutrients, oxygen and bacteria concentrate and accumulate in the solid interphase rather than in the liquid phase.

The present invention comprises the obtaining of specific bacterial consortia through an adaptation, selection and optimisation process of the microbial flora of the dumping in an independent unit, with high oxygenation rate and immersed support.

As has been indicated, the biological reactor which constitutes the second subject matter of the present invention, is applicable for the biological degradation of waste waters and liquid residues with high contaminating load.

According to the invention, the support elements S may be corrugated tubes S2 commercially known, which are different in length and with lengths proportional to the diameter and with different diameters, depending on the volume of the bioreactor where they are immersed. Said support elements are applicable to the specific depuration of urban waste waters and/or liquid residues, liquid manure and leaches.

Said support elements S may consist of fabric mixed gauze pieces, and are applicable in the specific depuration of liquid manure, leaches and urban waste waters.

## Claims

1. Biological degradation process for pig and/or cattle liquid residues, of the type which comprises two conventional physical-chemical treatments one at the beginning and the other at the end of the main treatment which is carried out at a mixed anoxic and/or aerobic biological reactor (R) of two bodies (A/B), each one consists in an enclosure furnished with support elements (S) for the bacteria (Sa/Sb) which are permanently maintained completely and immersed (N) in the liquid (P) being treated, **characterised in that** the liquid residue (P) is subjected to a treatment in a reactor (R) with two bodies (A and B) comprising the phases anoxic in (A)-aerobic in (B), anoxic (A)-anoxic (B) when the circulation is performed according to the flux (5), in which the influent enters the body (A) first; and aerobic (A)-anoxic (B), aerobic (A)-anoxic (B) when the circulation is performed according to the flux (3) in which the influent enters the body (B) first.

2. Process, according to claim 1, **characterised in that** the influx fed (4) to the main treatment is carried out at the middle point of the internal circulation (C) in both opposite directions (3/5) between two enclosures bodies (A/B) .

3. Process, according to claim 1, **characterised in that** the leaving effluent (12) of the reactor (R) is subjected to a subsequent sludge thickening (6), and the remaining leaving treated liquid residues (7) of the sludge thickening (6), according to the degradation level required eventually, is subjected to an additional treatment at an auxiliary reactor (9), furnished with internal bacteriological support elements (S), and working alternatively in the anoxic and aerobic phases in sequence, and the leaving liquid (10) is subjected eventually to a final physical-chemical treatment.

4. Process, according to claim 1, **characterised in that** biomass (13) is inoculated directly from the main treatment into the auxiliary reactor (9) to maintain stable the biomass of said auxiliary reactor (9).

5. Anoxic and/or aerobic biological reactor for the depuration of waste water and/or liquid residues, of the type which consists of two enclosure bodies (A/B) through which the water and/or liquid residues (P) to be treated are passed, and which contains several support elements (S), for the fixation of bacteria (Sa/Sb), **characterised in that** the support elements (S) are kept completely immersed in the water and/or liquid residues (P), allowing the action of air and/or oxygen propeller means (16) of one of two enclosure bodies (A/B), when it functions in an aerobic way and of water and/or liquid residues circulation means (14) throughout the other one enclosure bodies (A/B) when it functions in an anoxic way.

6. Biological reactor, according to claim 5, **characterised in that** the support elements (S) consist in fabric pieces (S1) of plastic material and are positioned creating "corridors" between the fabric pieces (S1) for the laminar passing of the liquid residues being treated.

7. Biological reactor, according to claim 5, **characterised in that** the support elements (S) are corrugated section plastic tubes (S2) maintained into perforated cages, allowing the action of the air/oxygen propellers (16) of the corresponding enclosure bodies (A/B) when it acts in an aerobic form.

## Patentansprüche

1. Verfahren zum biologischen Abbau von flüssigen Schwein- bzw. Rindjaucherückständen, vom Typ, der zwei physiko-chemischen, herkömmlichen Behandlungen umfaßt, die eine am Anfang und die andere am Ende der Hauptbehandlung, die in einem gemischt anoxischen bzw. aeroben, biologischen Reaktor (R) durchgeführt wird, wobei dieser letztere aus zwei Körpern (A/B) besteht, die je einen Behälter bilden, der mit zur Aufnahme von Bakterien (Sa/Sb) bestimmten Aufnahmeelementen (S) versehen ist, wobei diese letzteren in der zu behandelnden Flüssigkeit (P) stetig ganz getaucht gehalten werden; **dadurch gekennzeichnet, daß** das flüssige Rückstand (P) in einem Reaktor (R) mit zwei Körpern (A und B) einer Behandlung unterzogen wird, die die folgenden Phasen umfaßt: anoxisch in (A)-aerob in (B), anoxisch (A)-anoxisch (B) wenn die Strömung in der Stromrichtung (5) stattfindet und die einströmende Flüssigkeit in den Körper (A) dementsprechend zuerst einfließt; und aerob (A)-anoxisch (B), aerob (A)-anoxisch (B) wenn die Strömung in der Stromrichtung (3) stattfindet und die einströmende Flüssigkeit in den Körper (B) dementsprechend zuerst einfließt.

2. Verfahren nach Anspruch 1, **dadurch gekennzeichnet, daß** der Zufluß (4) zur Hauptbehandlung im Mittelpunkt der inneren Strömung (C) in beide entgegengesetzten Stromrichtungen (3/5) zwischen zwei Behälterkörpern (A/B) durchgeführt wird.

3. Verfahren nach Anspruch 1, **dadurch gekennzeichnet, daß** die aus dem Reaktor (R) ausströmende Flüssigkeit (12) einer nachfolgenden Schlammeindickung (6) unterzogen wird und die flüssigen, nach dieser Behandlung entstehenden, ausströmenden Rückstände (7) der Schlammeindickung (6) je nach dem letztlich erforderten Abbaugrad einer zusätzlichen Behandlung in einem Hilfsreraktor (9) unterzogen werden, wobei dieser letztere mit innerlich angeordneten, bakteriologischen Aufnahmeelementen (S) versehen ist und in den anoxischen und aeroben Phasen abwechselnd arbeitet, und die ausströmende Flüssigkeit (10) zuletzt einer endlichen, physiko-chemischen Behandlung unterzogen wird.

4. Verfahren nach Anspruch 1, **dadurch gekennzeichnet, daß** Biomasse (13) direkt aus der Hauptbehandlung in den Hilfsreaktor (9) zwecks Aufrechterhaltung der Biomasse des vorgenannten Hilfsreaktors (9) inokuliert wird.

5. Anoxischer bzw. aerober, biologischer Reaktor zur Abwasser- bzw. Flüssigrückstandsreinigung, vom Typ, der aus zwei vom zu behandelnden Abwasser bzw. von den zu behandelnden Flüssigrückständen (P) durchgeflossenen Behälterkörpern (A/B) besteht und mehrere zur Anbindung von Bakterien (Sa/Sb) bestimmten Aufnahmeelemente (S) enthält; **dadurch gekennzeichnet, daß** die Aufnahmeelemente (S) ganz im Wasser bzw. in den flüssigen Rückständen (P) getaucht gehalten werden, wobei der Reaktor den Betrieb von Luft- bzw. Sauerstofftreibmitteln (16) von einem der zwei Behälterkörper (A/B) wenn in der aeroben Arbeitsweise und von Wasser- bzw. Flüssigrückstandumwälzmitteln (14) zur Umwälzung durch den anderen Behälterkörper (A/B) wenn in der anoxischen Arbeitsweise ermöglicht.

6. Biologischer Reaktor nach Anspruch 5, **dadurch gekennzeichnet, daß** die Aufnahmeelemente (S) aus Kunststoffgewebestücken (S1) bestehen und so positioniert sind, daß sie zwischen den Gewebestücken (S1) "Laufgänge" zur laminaren Durchströmung der zu behandelnden Flüssigrückstände schaffen.

7. Biologischer Reaktor nach Anspruch 5, **dadurch gekennzeichnet, daß** die Aufnahmeelemente (S) Kunststoffrohre (S2) sind, die einen gewellten Längsschnitt haben und in durchgelochten Käfigen gehalten werden, wobei der Reaktor den Betrieb von Luft-/Sauerstofftreibmitteln (16) der entsprechenden Behälterkörper (A/B) wenn in einer aeroben Arbeitsweise ermöglicht.

## Revendications

1. Procédé biologique de dégradation de résidus liquides de purins de porcins et/ou bovins, du type qui comprend deux traitements physique-chimiques conventionnels, l'un au début et l'autre à la fin du traitement principal qui est effectué dans un réacteur (R) biologique mixte anoxique et/ou aérobique à deux corps (A/B), chacun d'eux consistant en une enceinte munie d'éléments de support (S) pour les bactéries (Sa/Sb) qui sont permanemment maintenus complètement submergés (N) dans le liquide (P) étant traité; **caractérisé en ce que** le résidu liquide (P) est soumis à un traitement dans un réacteur (R) avec deux corps (A et B) comprenant les phases anoxique dans (A)-aérobique dans (B), anoxique (A)-anoxique (B) lorsque la circulation se rálise selon le flux (5), où l'affluent entre dans le corps (A) en premier lieu; et aérobique (A)-anoxique (B), aérobique (A)-anoxique (B) lorsque la circulation se réalise selon le flux (3), où l'affluent entre dans le corps (B) en premier lieu.

2. Procédé, d'après la revendication 1, **caractérisé en ce que** le flux d'entrée (4) qui alimente le traitement principal y pénètre dans le point moyen de la circulation interne (C) dans les deux sens opposés (3/5) entre deux corps d'enceinte (A/B).

3. Procédé, d'après la revendication 1, **caractérisé en ce que** l'effluent (12) sortant du réacteur (R) est soumis à une subséquente concentration de boues (6), et les restants résidus (7) liquides traités sortants de la concentration de boues (6), selon le niveau de dégradation finalement exigé, sont soumis à un traitement additionnel dans un réacteur auxiliaire (9) qui est muni avec des éléments (S) internes de support bactériologique et fonctionne alternativement dans les phases anoxique et aérobique de façon séquentielle, le liquide sortant (10) étant finalement soumis à un traitement physique-chimique final.

4. Procédé, d'après la revendication 1, **caractérisé en ce que** de la biomasse (13) est inoculée directement du traitement principal dans le réacteur auxiliaire (9) pour maintenir stable la biomasse dudit réacteur auxiliaire (9).

5. Réacteur biologique anoxique et/ou aérobique pour la purification d'eaux résiduaires et/ou résidus liquides, du type consistant en deux corps (A/B) d'enceinte à travers lesquels sont passés l'eau et/ou les résidus liquides (P) à traiter, et qui contient une pluralité d'éléments de support (S) pour la fixation des bactéries (Sa/Sb); **caractérisé en ce que** les éléments de support (S) sont maintenus complètement submergés dans l'eau et/ou les résidus liquides (P), le réacteur permettant l'action de moyens (16) propulseurs d'air et/ou oxygène d'un des deux corps d'enceinte (A/B) lorsqu'il fonctionne de façon aérobique, et de moyens (14) de circulation d'eau et/ou résidus liquides à travers l'autre corps d'enceinte (A/B) lorsqu'il fonctionne de façon anoxique.

6. Réacteur biologique, d'après la revendication 5, **caractérisé en ce que** les éléments de support (S) sont composés de pièces de toile (S1) en matière plastique et sont positionnés pour créer des "couloirs" entre les pièces de toile (S1) pour le passage laminaire des résidus liquides en traitement.

7. Réacteur biologique, d'après la revendication 5, **caractérisé en ce que** les éléments de support (S) sont des tubes en plastique à section corruguée (S2) qui sont maintenus dans des cages perforées, le réacteur permettant l'action des propulseurs (16) d'air/oxygène des correspondants corps d'enceinte (A/B) lorsqu'il agit de façon aérobique.
